# EUROPÄISCHE PATENTSCHRIFT

(11) **EP 2 647 278 B1**
(45) Veröffentlichungstag und Bekanntmachung des Hinweises auf die Patenterteilung: **22.06.2016**
(21) Anmeldenummer: 13159759.3
(22) Anmeldetag: 18.03.2013
(51) Int. Cl.: A01D 75/18, A01D 34/82, A01D 34/66

(54) **Mähmaschine mit einem Mähbalken**
Mowing machine with a cutter bar
Faucheuse dotée d'une barre de coupe

(30) Priorität: 21.03.2012 DE 102012005544
(43) Veröffentlichungstag der Anmeldung: 09.10.2013
(73) Patentinhaber: CLAAS Saulgau GmbH, 88348 Bad Saulgau (DE)
(72) Erfinder: Ober, Martin, 78736 Epfendorf-Trichtingen (DE); Assfalg, Markus, 88367 Hohentengen (DE); Zwanzger, Matthias, 91486 Üehlfeld (DE); Schneider, Bernd, 72511 Hornstein (DE)

(56) Entgegenhaltungen:
- EP-A1- 1 369 019
- GB-A- 1 489 373
- US-A- 2 910 820
- US-A1- 2009 158 699

## Beschreibung

Die Erfindung betrifft eine Mähmaschine mit einem Mähbalken, wobei der Mähbalken wenigstens zwei Mähvorrichtungen zum Mähen von stängeligem, auf einem Feld angeordnetem Erntegut aufweist, wobei die Mähvorrichtung wenigstens ein um eine Drehachse rotierendes Mähmesser umfasst, nach dem Oberbegriff des Anspruchs 1.

### Stand der Technik

US2009/0158699 A1 offenbart einen Rotationsmähbalken bestehend aus einer Reihe von miteinander verbundenen Modulen, deren Gehäuse mit Gleitkufen versehen sind.

Bislang sind verschiedene Mähmaschinen bekannt, die beispielsweise als so genannte Heck- oder Seitenmähwerke oder auch als Frontmähwerke mit zwei oder mehreren, umlaufenden Mähwerkzeugen ausgebildet sind und wobei deren Mähklingen frei bzw. schwenkbeweglich am Umfang von Mähscheiben an einem Zapfen aufgehängt sind. Diese Mähmesser bzw. Mähklingen werden erst durch die Zentrifugalkraft stabilisiert und mähen das Erntegut wie Grünfutter oder dergleichen im Betrieb dann ohne Gegenschneide ab.

Der so genannte Mähbalken besteht im Allgemeinen aus einem unten liegenden Getriebegehäuse/-kasten, in dem die Antriebsorgane, Sternrad oder Kegelrad bzw. Zahnradpaarungen gelagert sind und die antriebsseitig über eine Zapfwelle mit einem Traktor bzw. einer Antriebsmaschine in Verbindung stehen. Zudem sind die Mähscheiben bzw. Mähvorrichtungen ebenfalls in dem Getriebegehäuse gelagert.

Unterhalb dieses als Kastenprofil ausgebildeten Getriebegehäuses befinden sich Gleitkufen, die die Mähscheiben bzw. die Mähvorrichtung unter anderem vor Beschädigungen oder Abnutzungen schützen und auf denen das Mähwerk während dem Mähbetrieb auf dem Feld bzw. dem Boden gleitet. Das bedeutet, dass die Mähmaschine auf den Gleitkufen während der Mähphase gelagert ist bzw. aufliegt.

Die Gleitkufen sind gewöhnlich an mehreren Befestigungspunkten bzw. mit Befestigungsschrauben am Kastenprofil bzw. Getriebegehäuse des Mähbalkens lösbar fixiert, so dass die Gleitkufen beispielsweise bei starkem Abrieb entsprechend ersetzt werden können.

Bei derartigen Scheibenmähern sammelt sich bislang im Zwischenbereich zwischen den Gleitkufen vielfach Erde bzw. Schmutz an. Die Erde bzw. der Schmutz stammt beispielsweise von Bodenunebenheiten bzw. von Maulwurfs- oder Maushaufen. Beim Überfahren bzw. Darübergleiten der Mähmaschine über derartige Boden- bzw. Humusanhäufungen wird die Erde bzw. der Schmutz durch die Gleitkufe in den Zwischenbereich zwischen zwei Gleitkufen verdrängt und sammelt sich dort an.

Eine derartige Ansammlung von Schmutz bzw. Boden/Erde im Zwischenbereich zwischen zwei Gleitkufen führt jedoch zu einer schlechten Schnittqualität.

Zudem ergibt sich durch derartigen Schmutz auch eine stärkere Abnützung bzw. höheren Verschleiß der Montagebohrung bzw. der Befestigungselemente der Gleitkufen.

Dies führt dazu, dass einerseits die Gleitkufe vergleichsweise schnell abgenützt wird und andererseits der Austausch durch entsprechend erodierte Befestigungselemente zum Teil deutlich aufwendiger wird.

### Aufgabe und Vorteile der Erfindung

Aufgabe der Erfindung ist es demgegenüber, eine Mähmaschine mit einem Mähbalken vorzuschlagen, die die Nachteile des Stands der Technik wenigstens teilweise beseitigt.

Diese Aufgabe wird, ausgehend von einer Mähmaschine der einleitend genannten Art, durch die Merkmale des Anspruchs 1 gelöst. Durch die in den Unteransprüchen genannten Maßnahmen sind vorteilhafte Ausbildungen und Weiterbildungen der Erfindung möglich.

Dementsprechend zeichnet sich eine erfindungsgemäße Mähmaschine dadurch aus, dass die Gleitkufe wenigstens ein Schmutzleitelement zum Leiten von Schmutz aufweist. Vorteilhafterweise wird der Schmutz zu einem Auflagebereich der Gleitkufe geleitet, d.h. zu einem Bereich, der während des Mähbetriebes auf dem Feld aufliegt bzw. das Feld berührt.

Mit Hilfe eines derartigen Schmutzleitelementes kann der Schmutz bzw. die Erde/Humus in vorteilhafter Weise unter der Gleitkufe hindurch geleitet bzw. umgelenkt werden. Hiermit wird verhindert, dass der Schmutz bzw. die Erde/Humus sich in einem Zwischenbereich zwischen zwei Gleitkufen ansammelt und den Mähvorgang bzw. die Mähmaschine beeinträchtigt. Vielmehr verhindert das Schmutzleitelement, dass der Schmutz an einen bzw. die seitlichen Randbereiche gelenkt wird. Gemäß der Erfindung wird der Schmutz bzw. die Erde zum Auflagebereich bzw. zum mittleren Bereich der Gleitkufe gelenkt.

Das Schmutzleitelement weist eine Längsachse und/oder eine Längserstreckung auf, wobei die Längsachse und/oder Längserstreckung in Bezug zur Fahrtrichtung der Mähmaschine in einem spitzen Winkel angeordnet ist. Hiermit wird eine vorteilhafte Umlenkung des Schmutzes bzw. der Erde wenigstens teilweise quer zur Fahrtrichtung betrachtet, realisiert. Hierdurch kann eine kontrollierte Leitung bzw. Führung des Schmutzes innerhalb des Bereiches der Gleitkufe umgesetzt werden. Beispielsweise wird der Schmutz bzw. die Erde daran gehindert, an einen seitlichen Randbereich der Gleitkufe verdrängt zu werden.

Mit dieser Erfindung kann in vorteilhafter Weise Schmutz bzw. Erde aus einem seitlichen Randbereich der Gleitkufe sogar nach innen bzw. in Richtung eines mittleren Auflagebereichs der Gleitkufe bzw. zur Mitte hin geleitet oder geführt werden. Hierdurch wird der Schmutz bzw. die Erde in vorteilhafter Weise im Betrieb unter der Gleitkufe hindurchgeführt, so dass dieser sich nicht am Mähbalken bzw. in einem Zwischenbereich zweier Gleitkufen ansammeln kann. Vorteilhafterweise ist die Gleitkufe an einem vorderen, in Fahrtrichtung weisenden Abschnitt derart ausgebildet, dass sie im Wesentlichen eine Kreisbogenkontur als Projektion auf die horizontale Ebene aufweist bzw. im vorderen Bereich der kreisförmigen Kontur der Mähvorrichtung bzw. der Umlaufbahn der Mähscheibe in etwa entspricht.

Vorzugsweise weist die Gleitkufe im Querschnitt und/oder längs der Fahrtrichtung betrachtet wenigstens teilweise eine schräge bzw. bogenförmige Kontur auf, so dass die Vorderkante der Gleitkufe nahe dem Mähmesser angeordnet ist und ein hinterer Auflagebereich der Gleitkufe auf dem Feld bzw. dem Boden aufliegt bzw. gleitet. Durch diese vorteilhafte Kufenform können kleinere Feldunebenheiten bzw. Bodenanhäufungen gepuffert werden. Bei bisherigen Gleitkufen hat diese Kufenform zu einer seitlichen Ausweichbewegung des Schmutzes geführt, so dass sich dieser im Zwischenbereich zweier benachbarter Gleitkufen angesammelt hat.

Das Schutzleitelement gemäß der Erfindung ist derart ausgebildet, dass dieses ein quer zur Fahrtrichtung betrachtetes Gleiten bzw. Führen der Erde bzw. des Schmutzes kontrolliert und in vorteilhafter Weise lenkt. Das bedeutet, dass das Schmutzleitelement als Seitenleitelement bzw. Schmutzlenkelement ausgebildet ist, wobei Schmutz bzw. Erde oder dergleichen bevorzugt quer zur Fahrtrichtung betrachtet geleitet bzw. geführt wird, vorzugsweise zum Auflagebereich der Gleitkufe hingeleitet bzw. gelenkt. Hiermit wird ein ungewolltes bzw. nachteiliges seitliches Verdrängen der Erde bzw. des Schmutzes zum Randbereich der Gleitkufe, d.h. in den Zwischenbereich zwischen zwei Gleitkufen, wirkungsvoll verhindert.

Das Verhindern eines seitlichen Ausweichens des Schmutzes in den Zwischenbereich zwischen zwei Gleitkufen kann bereits beispielsweise durch eine Anordnung des Schmutzleitelementes bzw. dessen Längsachse und/oder Längserhebung und/oder Längsvertiefung im Wesentlichen längs der Fahrtrichtung verhindert werden.

Beispielsweise kann das Schmutzleitelement als Schutzwall oder als angeschweißtes Leitelement an der Gleitkufe ausgebildet werden.

In einer vorteilhaften Ausführungsform der Erfindung ist das Schmutzleitelement als eingeformte und/oder eingegossene Erhebung der Gleitkufe ausgebildet. Hierdurch wird eine einstückige Gleitkufe realisiert, die das vorteilhafte Schmutzleitelement gemäß der Erfindung umfasst. Beispielsweise beim Pressen bzw. Herstellen entsprechender Gleitkufen aus Metallblech ist es von Vorteil bzw. wirtschaftlich günstig, das Schmutzleitelement als vorteilhafte Erhebung auszuformen bzw. einzupressen. Dagegen ist es bei einer Herstellung mittels Gießverfahren von Vorteil, das Schmutzleitelement als gegossene Erhebung zu realisieren.

In einer besonderen Weiterbildung der Erfindung ist das Schmutzleitelement als Schutzvorrichtung für eine Befestigungseinheit zum Befestigen der Gleitkufe am Mähbalken ausgebildet. Beispielsweise schützt das Schmutzleitelement eine Montageöffnung bzw. eine Befestigungsschraube zum Anschrauben der Gleitkufe am Mähbalken bzw. an einem Getriebekasten oder dergleichen.

Vorzugsweise ist das Schmutzleitelement in Fahrtrichtung betrachtet vor einer Befestigungseinheit angeordnet. Hierdurch wird die Befestigungseinheit wirkungsvoll vor Abrasion bzw. Erosion durch Erde bzw. Schmutz geschützt. In vorteilhafter Weise ist die Formgebung des Schmutzleitelementes derart realisiert, dass diese einen "Strömungsschatten" für das an der Gleitkufe vorbeiströmende Erdmaterial bzw. den Schmutz ausbildet. Vorteilhafterweise ist die Befestigungseinheit in diesem "Strömungsschatten" des Schmutzleitelementes gemäß der Erfindung angeordnet. Hierdurch wird eine Abrasion der Befestigungseinheit wie beispielsweise ein Schraubenkopf oder dergleichen wirkungsvoll reduziert bzw. vollständig unterbunden und somit die Befestigung vor Abrieb geschützt. Dementsprechend wird eine Beeinträchtigung der Demontage der Gleitkufe wirkungsvoll verhindert.

In einer vorteilhaften Ausführungsform der Erfindung weist die Gleitkufe wenigstens zwei, beidseits deren Mittenachse angeordnete Schmutzleitelemente auf. Mit zwei entsprechend vorteilhaften Schmutzleitelementen kann beispielsweise Erde bzw. Schmutz aus beiden Randbereichen der Gleitkufe in Richtung Mitte bzw. zur Mittenachse hin geleitet bzw. geführt werden, so dass während dem Mähbetrieb die Erde bzw. der Schmutz in vorteilhafter Weise unter der Gleitkufe hindurchströmt.

Vorzugsweise ist zwischen den beiden Schmutzleitelementen ein Abstand vorgesehen. Der Abstand definiert im Mähbetrieb den Bereich der Gleitkufe, in dem die Erde bzw. der Schmutz gemäß der Erfindung entlang strömt. Dies ist vorzugsweise der mittlere Bereich bzw. der Auflagebereich der Gleitkufe.

Bevorzugt umfasst die Gleitkufe einen Schmutzkanal. Vorteilhafterweise weist der Schmutzkanal zwei im Wesentlichen in Fahrtrichtung ausgerichtete Schmutzleitelemente und/oder Längsachsen und/oder Längserstreckungen der beiden Schmutzleitelemente auf. Das bedeutet, dass nahezu parallel zueinander ausgerichtete Schmutzleitelemente einen definierten Bereich generieren, in dem der Schmutz bzw. die Erde im Betrieb unter der Gleitkufe hindurch strömt. Hierdurch kann in vorteilhafter Weise eine Beeinträchtigung sensibler Bereiche bzw. der Bereiche, in denen die Befestigung der Gleitkufe am Mähbalken bzw. an einem Antriebsgehäuse oder dergleichen befestigt wird, wirkungsvoll verhindern werden.

Beispielsweise kann der Bereich eines Schmutzkanals mit besonderes vorteilhafter Materialdicke, insbesondere mit Hilfe einer Verdickung realisiert werden, so dass die Abrasion bzw. die Erosion von Material im Mähbetrieb durch vorbeiströmende Erde bzw. Schmutz in vorteilhafter Weise gehandhabt bzw. toleriert werden kann. Das bedeutet, dass die Standzeit der Gleitkufe gemäß der Erfindung durch eine entsprechende Materialanhäufung und/oder durch eine entsprechend vorteilhafte Materialauswahl mittels abrasions- bzw. erosionsresistenterem Material, zumindest im Bereich des Schmutzkanals, verlängert werden kann. Beispielsweise kann im Bereich des Schmutzkanals eine andere Materialauswahl vorgesehen werden, als in dem bzw. den Bereichen außerhalb des Schmutzkanals. Auch können die oder der Bereich außerhalb des Schmutzkanals gegebenenfalls eine kleinere Wandstärke aufweisen, so dass eine Gewichtseinsparung bei einem Mähbalken bzw. einer Mähmaschine gemäß der Erfindung realisierbar ist.

Vorteilhafterweise bilden Verlängerungslinien der Längsachsen oder Längserstreckungen der Schmutzleitelemente ein in Fahrtrichtung sich öffnendes V bzw. eine V-Form aus. Hiermit wird ein Schmutztrichter realisierbar, der im Betrieb Schmutz sammelt und in vorteilhafter Weise in den mittleren Bereich bzw. hin zur Mittenachse der Gleitkufe leitet.

Die maximale Breite bzw. der maximale Abstand der V-förmig angeordneten Schmutzleitelemente ist möglichst groß zu wählen, so dass möglichst ein großer Anteil der Breite bzw. Fläche der Gleitkufe als Sammelbereich der beiden Schmutzleitelemente erfasst bzw. ausgebildet wird. Dementsprechend kann eine große Breite bzw. ein großer Anteil der Breite der erfindungsgemäßen Gleitkufe wirkungsvoll vor Beeinträchtigungen geschützt werden bzw. der Anteil der Gleitkufe, der durch einen entsprechenden "Sammeltrichter" von zwei entsprechend V-förmig angeordneten Schmutzleitelementen nicht erfasst wird, wird möglichst gering. Dies führt dazu, dass sich kein bzw. sehr wenig Schmutz zwischen zwei benachbarten Gleitkufen gemäß der Erfindung ansammeln kann.

In einer bevorzugten Ausführungsform der Erfindung ist ein Schmutzkanal in Fahrtrichtung betrachtet hinter zwei, spitzwinklig zur Fahrtrichtung ausgerichteten Schmutzleitelemente angeordnet. Hiermit wird erreicht, dass möglichst über einen großen Anteil der Länge der Gleitkufe (in Fahrtrichtung betrachtet) durch die Schmutzleitelemente gemäß der Erfindung der Schmutz bzw. die Erde erfasst bzw. kontrolliert geleitet wird.

Bei dieser Ausführungsform der Erfindung sind in vorteilhafter Weise die zwei, spitzwinklig zur Fahrtrichtung ausgerichtete Schmutzleitelemente zum Sammeln von Schmutz bzw. Erde und somit als "Sammeltrichter" ausgebildet. Diese beiden vorderen Schmutzleitelemente leiten den Schmutz bzw. die Erde in Fahrtrichtung betrachtet nach hinten weiter zum Schmutzkanal bzw. zu zwei weiteren Schmutzleitelementen, die voneinander beabstandet und vorzugsweise nahezu parallel zueinander bzw. in Fahrtrichtung ausgerichtet sind. Die hinteren beiden Schmutzleitelemente generieren somit einen Schmutzkanal gemäß der Erfindung. Auch die beiden spitzwinklig angeordneten Schmutzleitelemente sind als sich verjüngender Schmutzkanal ausgebildet.

In vorteilhafter Weise kann ein spitzwinklig angeordnetes Schmutzleitelement mit einem dahinter angeordneten in Fahrtrichtung ausgerichteten Schmutzleitelement auch als durchgehendes bzw. einstückiges Schmutzleitelement ausgebildet werden.

Grundsätzlich kann gemäß der Erfindung mit einem bzw. mehreren Schmutzleitelementen eine definierte bzw. kontrollierte Lenkung/Führung von Schmutz bzw. Erde realisiert werden. Hierdurch kann nicht nur die Abrasion bzw. die Erosion der Gleitkufe definiert gesteuert, insbesondere reduziert werden, sondern es können auch entsprechende Komponenten der Gleitkufe bzw. Befestigungsorte oder Befestigungselemente wirkungsvoll vor mechanischen Stößen oder dergleichen geschützt und vor allem auch vor Abnützung bzw. Abrasion geschützt werden.

### Ausführungsbeispiel

Ein Ausführungsbeispiel der Erfindung ist in der Zeichnung dargestellt und wird anhand der Figuren nachfolgend näher erläutert.

Im Einzelnen zeigt:
- Figur 1: eine schematische Draufsicht auf ein Gespann mit Traktor und Mähmaschine gemäß der Erfindung,
- Figur 2: eine schematische Ansicht des Gespanns gemäß Figur 1,
- Figur 3: eine schematische Ansicht von unten auf einen Mähbalken gemäß der Erfindung,
- Figur 4: eine schematische Ansicht von unten auf eine Gleitkufe gemäß der Erfindung,
- Figur 5: drei schematische Längsschnitte durch die Gleitkufe gemäß Figur 4,
- Figur 6: eine schematische, perspektivische Ansicht der Gleitkufe gemäß Figur 4 und
- Figur 7: mehrere schematische Querschnitte quer zur Fahrtrichtung durch eine Gleitkufe gemäß Figur 4.

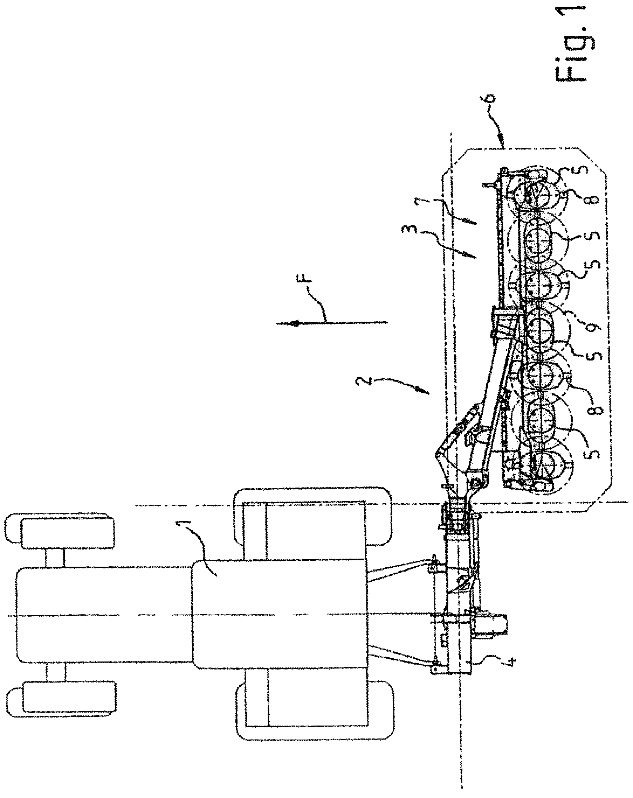

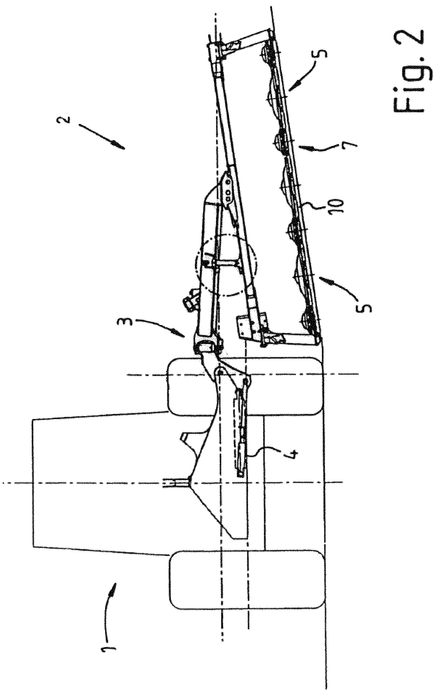

In Figur 1 ist schematisch ein Traktor 1 und eine Mähmaschine 2 bzw. ein heckseitig angeordnetes Seitenmähwerk 2 dargestellt. Das Mähwerk 2 umfasst einen Tragrahmen 3, der schwenkbar an einem Traggestell 4 angeordnet ist. Wie in Figur 2 deutlich wird, ist die Verschwenkbarkeit von Vorteil, um das Mähwerk 2 an unterschiedlichste Bodenkonturen anpassen zu können. Hierfür sind verschiedene Dreh- bzw. Schwenkachsen von Vorteil. Figur 2 zeigt eine Querfahrt zu einem Hang, wobei die Mähmaschine 2 etwas angewinkelt in Bezug auf den Traktor 1 im Mähbetrieb angeordnet ist.

Das Traggestell 4 ist in üblicher Weise über die Dreipunktaufhängung des Traktors 1 mit diesem fest verbunden und kann u. a. hiermit für eine Transportstellung (ohne nähere Darstellung) bzw. für eine sogenannte Vorgewendestellung angehoben bzw. hochgeklappt werden.

Das Mähwerk 2 weist eine Ummantelung 6 auf. Diese Ummantelung 6 ist üblicherweise in der Art einer Schürze herunterhängend ausgebildet, wie dies der Fachmann bereits seit längerem kennt.

Darüber hinaus weist das Mähwerk 2 einen Mähbalken 7 auf, an dem mehrere Mähscheiben 5 angeordnet sind. Wie vor allem in der Draufsicht gemäß Figur 1 deutlich wird, sind im vorliegenden Ausführungsbeispiel Mähscheiben 5 vorgesehen, die zwei um eine Drehachse drehbare Schneidmesser 8 aufweisen, wobei zwei benachbarte Mähscheiben 5 jeweils um 90° versetzt bzw. verdreht zueinander angeordnet sind. Es hat sich bereits in der Praxis bewährt, eine derartige, für den Fachmann wohl bekannte Anordnung bzw. Ausbildung für Mähwerke 2 zu realisieren. Schematisch sind die Umfangskreise der Mähmesser 8 beim Rotieren um ihre Drehachse in Figur 1 ebenfalls dargestellt.

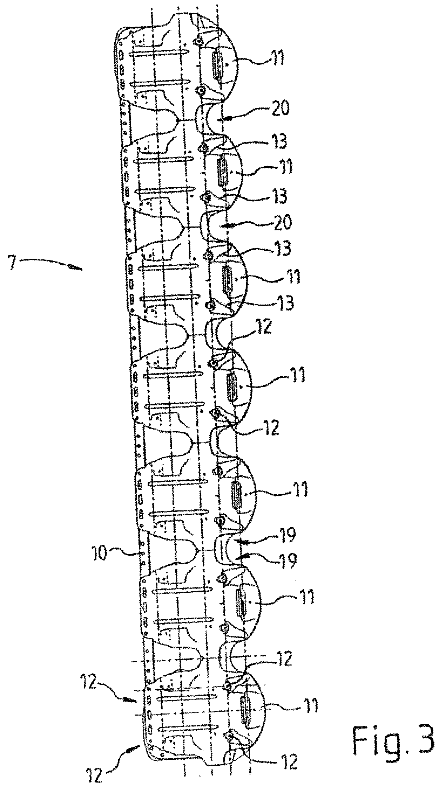

Ein nicht näher dargestellter Antrieb der Mähscheiben 5 erfolgt über bekannte Antriebswellen vom Traktor 1 über den Tragrahmen 3 und schließlich nach unten zum Mähbalken 7. In Figur 3 ist schematisch ein erfindungsgemäßer Mähbalken 7 dargestellt (in der Ansicht von unten). Hier wird deutlich, dass der Mähbalken u. a. ein Antriebsgehäuse 10 sowie mehrere Gleitkufen 11 umfasst. Innerhalb des Gehäuses 10 sind für den Fachmann in bekannter Weise Lager, Antriebszahnräder oder dergleichen untergebracht.

Der Mähbalken 7 weist ein Kastenprofil 10 bzw. Gehäuse 10 auf, an dem unterhalb der Mähscheiben 5 die Gleitkufen 11 montiert sind. Zur Montage sind mehrere Fixierelemente bzw. Befestigungsschrauben 12 zum Fixieren der Gleitkufen 11 am Gehäuse 10 des Mähbalkens 7 vorgesehen.

Die Gleitkufen 11 schützen die Mähscheiben 5 vor Beschädigungen und liegen beim Mähvorgang auf dem Feld bzw. dem Boden auf, wobei diese dann aufgrund des Mähbetriebes eine entsprechend starke Abnützung bzw. Abrasion erfahren. Bei entsprechend starker Abnutzung bzw. Verschleiß der Gleitkufen 11 werden diese dann mit Hilfe der Schrauben 12 entfernt und durch neue Gleitkufen 11 ersetzt.

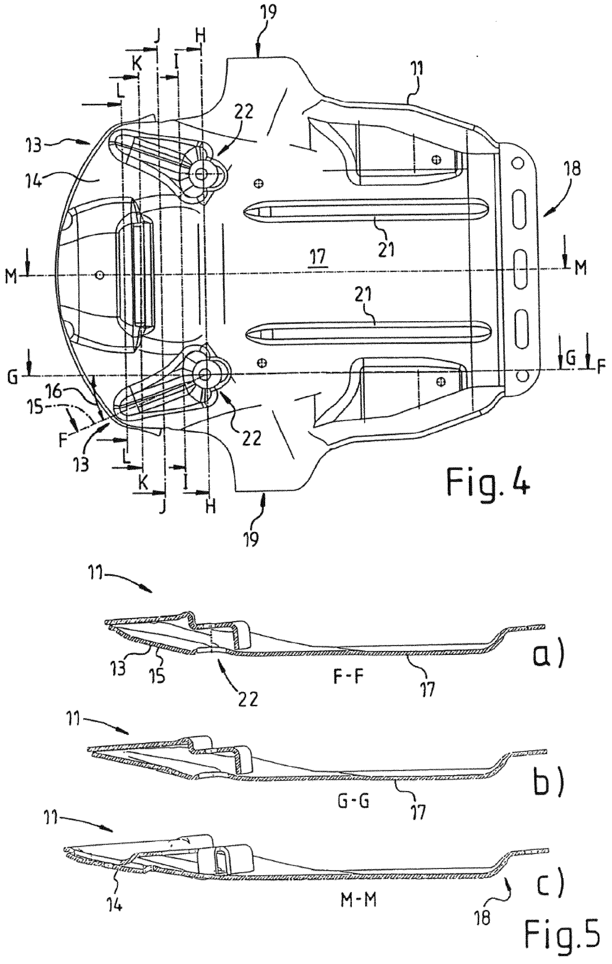

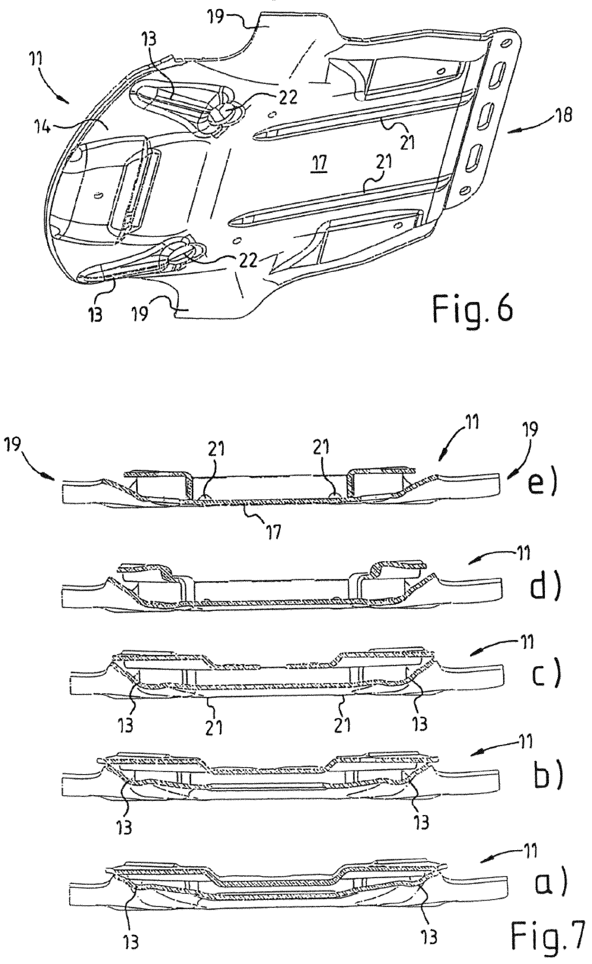

Die in Figur 4 bzw. 6 dargestellte Gleitkufe 11 gemäß der Erfindung weist in vorteilhafter Weise zwei Schmutzleitelemente 13 auf, die in einem vorderen Bereich 14 der Gleitkufe 11 angeordnet sind. Der vordere Bereich 14 der Gleitkufe 11 weist in Fahrtrichtung F.

Längsachsen 15 der Schmutzleitelemente 13 bzw. Erhebungen 13 sind in einem spitzen Winkel 16 zur Fahrtrichtung F ausgerichtet. Hierdurch wird Erde bzw. Schmutz während der Fahrt in Fahrtrichtung F in Richtung Mittelachse M in vorteilhafter Weise geleitet, so dass der Schmutz bzw. die Erde mittig durch einen mittleren Bereich 17 hindurch strömt bzw. durch die Gleitkufe 11 hindurchgeleitet wird, bis zum hintere Ende 18 der Gleitkufe 11. Dies verhindert, dass Schmutz an einen seitlichen Randbereich 19 der Gleitkufe 11 verdrängt wird.

Beim Stand der Technik sammelte sich entsprechender Schmutz bzw. Erde zwischen zwei Gleitkufen 11 in diesen Randbereich 19 zweier benachbarter Gleitkufen 11 an. Zwei benachbarte Randbereiche 19 zweier Gleitkufen 11 bilden einen Zwischenbereich 20, der schematisch in Figur 3 gekennzeichnet wurde. Ein Ansammeln von Erde bzw. Schmutz in diesem Bereich 20 führte bislang zu einem schlechten Mähbild bzw. beeinträchtigte den Mähvorgang, was mit den vorteilhaften Erhebungen 13 bzw. Schmutzleitelementen 13 gemäß der Erfindung wirkungsvoll verhindert wird.

Darüber hinaus umfasst die Gleitkufe 11 Verdickungen 21, die zur Versteifung bzw. Stabilisierung der eher dünnwandigen bzw. blechartigen Gleitkufe 11 vorgesehen sind. Wie vor allem in Figur 7 ersichtlich wird, sind die Verdickungen 21 im Wesentlichen nach Innen gerichtet. Figur 7 zeigt mehrere verschiedene Querschnitte (vgl. Figur 4) und Figur 5 zeigt dagegen mehrere Längsschnitte (vgl. Figur 4) durch die Gleitkufe 11.

Es ist denkbar, dass derartige Verdickungen 21 auch in der Art als Schmutzleitelemente bzw. als Erhebungen der Gleitkufe ausgebildet werden können. Hierdurch wird der Schmutz im mittleren Bereich 17 der Gleitkufe 11 zusätzlich geleitet bzw. geführt. Hierbei kann der Schmutz im Zwischenbereich zwischen den beiden nahezu parallel ausgerichteten Verdickungen 21 wie in einem Kanal nach hinten bzw. in den hinteren Bereich 18 der Gleitkufe 11 geleitet werden bzw. hindurchströmen.

Vorzugsweise sind vordere Spitzen der Schmutzleitelemente 13 bzw. Erhebungen 13 möglichst weit außen zum Randbereich 19 hin orientiert angeordnet, so dass diese als Sammler ausgebildet sind. Durch die vorteilhafte V-förmige Anordnung gemäß dem in den Figuren dargestellten Ausführungsbeispiel sind zwei beidseits der Mittelachse M bzw. symmetrisch um die Mittelachse M angeordnete Schmutzleitelemente 13 realisiert, so dass diese eine Art "Sammeltrichter" ausbilden und somit entsprechender Schmutz von Maulwurfshaufen bzw. Mäusehaufen möglichst umfassend einsammeln und zum mittleren Bereich 17 bzw. Auflagebereich 17 der Gleitkufe 11 leiten.

Darüber hinaus sind die Erhebungen 13 unmittelbar vor je einem Loch 22 angeordnet, so dass die Schmutzleitelemente 13 für diese Löcher 22 bzw. für darin angeordnete, nicht näher dargestellte Montageschrauben oder dergleichen eine Schutzfunktion erfüllen.

Die dargestellten Erhebungen 13 weisen am in Fahrtrichtung betrachteten vorderen Ende eine vergleichsweise dünne Breite bzw. Spitze auf und eine vergleichsweise große bzw. größere Breite im hinteren Bereich der Erhebung 13. Diese strömungsgünstige Form, in etwa dreieckförmige Außenkontur in der Draufsicht, führt dazu, dass die Erhebung 13 in der Art eines Strömungsleitelementes bzw. als "Schmutzspoiler" ausgebildet wird, wobei die Öffnung 22 für die Befestigungsschraube im "Strömungsschatten" der Erhebung 13 liegt. Hierdurch wird erreicht, dass der Bereich um die Öffnung 22 bzw. im montierten Zustand der Schraubenkopf oder dergleichen keine bzw. nahezu keine Abnutzung bzw. Abrasion durch vorbeiströmende Erde erfährt. Dies führt zu einer Verlängerung der Lebensdauer der Gleitkufe 11 gemäß der Erfindung. Auch nach längerem Einsatz kann die entsprechende Befestigungsschraube ohne größeren Aufwand entfernt und somit auch die Gleitkufe 11 demontiert werden. Beim Stand der Technik wurden bisher vielfach die Schrauben bzw. Schraubenköpfe oder dergleichen entsprechend einer starken Abrasion ausgesetzt, so dass die Demontage mit erheblichen Schwierigkeiten verbunden sein konnte.

Grundsätzlich kann eine Mähmaschine gemäß der Erfindung als an einen Traktor 1 angehängtes Mähwerk 2, sowohl heckseitig und/oder frontseitig anordenbar ausgebildet werden. Auch kann eine Mähmaschine gemäß der Erfindung als Selbstfahrer ausgebildet werden, wobei beispielsweise drei, fünf oder sieben Mähwerke 2 gemäß der Erfindung vorhanden sein können. Derartige Großflächenmäher bzw. Mähmaschinen sind von der Anmelderin mit der Bezeichnung "COUGAR" bereits seit langen im Einsatz.

### Bezugszeichenliste

- 1: Traktor
- 2: Mähwerk
- 3: Trageinheit
- 4: Traggestell
- 5: Mähscheibe
- 6: Ummantelung
- 7: Mähbalken
- 8: Mähmesser
- 9: Umfangskreis
- 10: Gehäuse
- 11: Gleitkufe
- 12: Schraube
- 13: Erhebung
- 14: Bereich
- 15: Längsachse
- 16: Winkel
- 17: Bereich
- 18: Bereich
- 19: Bereich
- 20: Bereich
- 21: Verdickung
- 22: Öffnung
- F: Fahrtrichtung
- M: Mittelachse

## Patentansprüche

1. Mähmaschine mit einem Mähbalken (7), wobei der Mähbalken (7) wenigstens zwei Mähvorrichtungen (5) zum Mähen von stängeligem, auf einem Feld angeordnetem Erntegut aufweist, wobei die Mähvorrichtung (5) wenigstens ein um eine Drehachse rotierendes Mähmesser (8) umfasst, wobei am Mähbalken (7) in vertikaler Richtung unterhalb der Mähvorrichtung (5) eine Gleitkufe (11) zum Gleiten auf dem Feld angeordnet ist und die Gleitkufe (11) wenigstens ein Schmutzleitelement (13, 21) zum Leiten von Schmutz aufweist, **dadurch gekennzeichnet, dass** das Schmutzleitelement (13, 21) eine Längsachse (15) und/oder eine Längserstreckung (15) aufweist, wobei die Längsachse (15) und/oder Längserstreckung (15) in Bezug zur Fahrtrichtung (F) der Mähmaschine in einem spitzen Winkel (16) angeordnet ist.

2. Mähmaschine nach einem der vorgenannten Ansprüche, **dadurch gekennzeichnet, dass** das Schmutzleitelement (13, 21) als eingeformte und/oder eingegossene Erhebung (13) der Gleitkufe (11) ausgebildet ist.

3. Mähmaschine nach einem der vorgenannten Ansprüche, **dadurch gekennzeichnet, dass** das Schmutzleitelement (13, 21) als Schutzvorrichtung (13) für eine Befestigungseinheit (12, 22) zum Befestigen der Gleitkufe (11) am Mähbalken (7) ausgebildet ist.

4. Mähmaschine nach einem der vorgenannten Ansprüche, **dadurch gekennzeichnet, dass** das Schmutzleitelement (13, 21) in Fahrtrichtung (F) betrachtet vor der Befestigungseinheit (12, 22) angeordnet ist.

5. Mähmaschine nach einem der vorgenannten Ansprüche, **dadurch gekennzeichnet, dass** die Gleitkufe (11) wenigstens zwei, beidseits deren Mittelachse (M) angeordnete Schmutzleitelemente (13, 21) aufweist.

6. Mähmaschine nach Anspruch 5, **dadurch gekennzeichnet, dass** zwischen den beiden Schmutzleitelementen (13, 21) ein Abstand vorgesehen ist.

7. Mähmaschine nach einem der vorgenannten Ansprüche, **dadurch gekennzeichnet, dass** die Gleitkufe (11) einen Schmutzkanal (17) umfasst.

8. Mähmaschine nach einem der vorgenannten Ansprüche 5 bis 7, **dadurch gekennzeichnet, dass** Verlängerungslinien der Längsachsen (15) und/oder Längserstreckungen (15) der beiden Schmutzleitelemente (13) ein in Fahrtrichtung (F) sich öffnendes V ausbilden.

9. Mähmaschine nach einem der vorgenannten Ansprüche 7 oder 8, **dadurch gekennzeichnet, dass** der Schmutzkanal (17) zwei im Wesentlichen in Fahrtrichtung ausgerichtete Schmutzleitelemente (21) und/oder Längsachsen (15) und/oder Längserstreckungen (15) der beiden Schmutzleitelemente (21) aufweist.

10. Mähmaschine nach einem der vorgenannten Ansprüche 7 bis 9, **dadurch gekennzeichnet, dass** der Schmutzkanal (17) in Fahrtrichtung (F) betrachtet hinter zwei, spitzwinklig zur Fahrtrichtung (F) ausgerichtete Schmutzleitelemente (13) angeordnet ist.

## Claims

1. A mowing machine comprising a mowing bar (7), wherein the mowing bar (7) has at least two mowing devices (5) for mowing stalk crop material on a field, wherein the mowing device (5) includes at least one mowing blade (8) rotating about an axis of rotation, wherein arranged on the mowing bar (7) below the mowing device (5) in a vertical direction is a sliding skid (11) for sliding on the field and the sliding skid (11) has at least one dirt guide element (13, 21) for guiding dirt, **characterised in that** the dirt guide element (13, 21) has a longitudinal axis (15) and/or a longitudinal extent (15), wherein the longitudinal axis (15) and/or longitudinal extent (15) is arranged at an acute angle (16) in relation to the direction of travel (F) of the mowing machine.

2. A mowing machine according to claim 1 **characterised in that** the dirt guide element (13, 21) is in the form of a raised portion (13) which is shaped or cast in the sliding skid (11).

3. A mowing machine according to one of the preceding claims **characterised in that** the dirt guide element (13, 21) is in the form of a protection device (13) for a fixing unit (12, 22) for fixing the sliding skid (11) to the mowing bar (7).

4. A mowing machine according to one of the preceding claims **characterised in that** the dirt guide element (13, 21) is arranged in front of the fixing unit (12, 22) as viewed in the direction of travel (F).

5. A mowing machine according to one of the preceding claims **characterised in that** the sliding skid (11) has at least two dirt guide elements (13, 21) arranged at both sides of its central axis (M).

6. A mowing machine according to claim 5 **characterised in that** there is a spacing between the two dirt guide elements (13, 21).

7. A mowing machine according to one of the preceding claims **characterised in that** the sliding skid (11) includes a dirt passage (17).

8. A mowing machine according to one of preceding claims 5 to 7 **characterised in that** prolongation lines of the longitudinal axes (15) and/or longitudinal extents (15) of the two dirt guide elements (13) form a V which opens in the direction of travel (F).

9. A mowing machine according to one of preceding claims 7 and 8 **characterised in that** the dirt passage (17) has two dirt guide elements (21) oriented substantially in the direction of travel and/or longitudinal axes (15) and/or longitudinal extents (15) of the two dirt guide elements (21).

10. A mowing machine according to one of preceding claims 7 to 9 **characterised in that** viewed in the direction of travel (F) the dirt passage (17) is arranged downstream of two dirt guide elements (13) oriented at an acute angle relative to the direction of travel (F).

## Revendications

1. Faucheuse comprenant un lamier (7), le lamier (7) comportant au moins deux dispositifs de fauchage (5) pour faucher une récolte en tiges disposée sur un champ, le dispositif de fauchage (5) comprenant au moins un couteau (8) tournant autour d'un axe de rotation, sur le lamier (7) étant disposé, dans la direction verticale sous le dispositif de fauchage (5), un patin (11) pour glisser sur le champ, et le patin (11) comportant au moins un guide-terre (13, 21) pour guider la terre, **caractérisée en ce que** le guide-terre (13, 21) présente un axe longitudinal (15) et/ou une extension longitudinale (15), l'axe longitudinal (15) et/ou l'extension longitudinale (15) étant disposés à angle aigu (16) par rapport au sens de la marche (F) de la faucheuse.

2. Faucheuse selon une des revendications précédentes, **caractérisée en ce que** le guide-terre (13, 21) est conçu sous la forme d'une partie relevée moulée et/ou coulée (13) du patin (11).

3. Faucheuse selon une des revendications précédentes, **caractérisée en ce que** le guide-terre (13, 21) est conçu sous la forme d'un dispositif de protection (13) d'une unité de fixation (12, 22) destinée à fixer le patin (11) sur le lamier (7).

4. Faucheuse selon une des revendications précédentes, **caractérisée en ce que**, vu dans le sens de la marche (F), le guide-terre (13, 21) est disposé devant l'unité de fixation (12, 22).

5. Faucheuse selon une des revendications précédentes, **caractérisée en ce que** le patin (11) comporte au moins deux guide-terre (13, 21) disposés de part et d'autre de son axe médian (M).

6. Faucheuse selon la revendication 5, **caractérisée en ce qu'**entre les deux guide-terre (13, 21) est prévu un intervalle.

7. Faucheuse selon une des revendications précédentes, **caractérisée en ce que** le patin (11) comprenant un canal à terre (17).

8. Faucheuse selon une des revendications précédentes 5 à 7, **caractérisée en ce que** des lignes de prolongement des axes longitudinaux (15) et/ou des extensions longitudinales (15) des deux guide-terre (13) forme un V ouvert dans le sens de la marche (F).

9. Faucheuse selon une des revendications précédentes 7 ou 8, **caractérisée en ce que** le canal à terre (17) comporte, orientés sensiblement dans le sens de la marche, deux guide-terre (21) et/ou axes longitudinaux (15) et/ou extensions longitudinales (15) des deux guide-terre (21).

10. Faucheuse selon une des revendications précédentes 7 à 9, **caractérisée en ce que**, vu dans le sens de la marche (F), le canal à terre (17) est disposé derrière deux guide-terre (13) orientés à angle aigu par rapport au sens de la marche (F).
